# EUROPEAN PATENT APPLICATION

(11) **EP 1 039 605 A1**
(43) Date of publication of application: **27.09.2000**
(21) Application number: 99830168.3
(22) Date of filing: 24.03.1999
(51) Int. Cl.: H02B 5/00

(54) **High-voltage circuit-breaker and disconnect-switch structure**

(71) Applicant: Ansaldo Trasmissione e Distribuzione S.r.l., 16151 Genova (IT)
(72) Inventor: Gardinetti, Danilo, 16157 Genova (IT); Delucchi, Maurizio, 16032 Camogli (Genova) (IT)
(74) Representative: Pezzoli, Ennio

(57) **Abstract**

In a circuit-breaker and disconnect-switch structure for a high-tension supply line (103a) comprising at least one circuit-breaker and disconnect-switch unit (106a) having a support element (133) for a first movable contact (136a) and a second movable contact (136b), and for a circuit breaker (139) disposed along a longitudinal axis (142) and connected between the first and second movable contacts (136a, 136b), the support element (133) being movable between a closed position and an open position in which the first and second movable contacts (136a, 136b) are connected to the supply line (103a) and are separated from the supply line (103a), respectively, the at least one circuit-breaker and disconnect-switch unit (106a) includes drive means (151) for moving the support element (133) between the closed position and the open position by rotating it about an axis (154) substantially parallel to the longitudinal axis (142) of the circuit breaker (139).

## Description

The present invention relates to a circuit-breaker and disconnect-switch structure for a high-tension supply line.

High-tension supply lines (for example, of the order of a few hundreds of kV) generally have circuit-breaker and disconnect-switch structures which can interrupt or establish a flow of current on the supply line. A structure of this type is constituted by a circuit breaker connected in series with a disconnect switch. The circuit breaker can interrupt or establish high-intensity currents (nominal currents or even short-circuit currents) and is extremely quick. The disconnect switch is connected in series with the circuit-breaker to indicate visually to an operator a condition (open or closed) of the circuit-breaker and disconnect-switch structure; the disconnect switch can interrupt or establish currents of negligible intensity (no load line) and is relatively slow.

In a particular known type of circuit-breaker and disconnect-switch structure, the circuit-breaker is an integral part of a movable arm of the disconnect switch; this enables a very compact unit to be produced, reducing the size of the circuit-breaker and disconnect-switch structure as a whole.

The inventors have recognized that this known structure nevertheless has some disadvantages. In particular, in a structure with a single-arm disconnect switch, this arm is rotated about one of its ends so that the circuit-breaker is not completely disconnected, still remaining connected to the supply line. Alternatively, a disconnect-switch with two arms is used, each arm including a corresponding circuit breaker; the arms are rotatable about respective ends which are connected to a central support element insulated from the supply line. The circuit-breakers are thus not under tension when the circuit-breaker and disconnect-switch is in the open condition; however, this result is achieved by a fairly complex structure (which uses two movable arms with a corresponding number of circuit breakers).

In any case, each circuit-breaker is subject to considerable mechanical stresses during the rotation of the movable arm so that it is liable to malfunction.

The object of the present invention is to overcome the aforementioned drawbacks. To achieve this object, a circuit-breaker and disconnect-switch structure for a high-tension supply line as described in the first claim is proposed.

In short, it is provided a circuit-breaker and disconnect-switch structure for a high-tension supply line comprising at least one circuit-breaker and disconnect-switch unit having a support element for a first movable contact and a second movable contact, and for a circuit breaker disposed along a longitudinal axis and connected between the first and second movable contacts, the support element being movable between a closed position and an open position in which the first and second movable contacts are connected to the supply line and are separated from the supply line, respectively, in which the at least one circuit-breaker and disconnect-switch unit includes drive means for moving the support element between the closed position and the open position by rotating about an axis substantially parallel to the longitudinal axis of the circuit breaker.

Moreover, a corresponding method of breaking and disconnecting a high-tension supply line is also proposed.

Further characteristics and the advantages of the circuit-breaker and disconnect-switch structure according to the present invention will become clear from the following description of a preferred embodiment thereof, given by way of non-limiting example, with reference to the appended drawings, in which:
Figure 1a shows the circuit-breaker and disconnect-switch structure, in perspective,
Figures 1b and 1c are a perspective view and a plan view of a circuit-breaker and disconnect-switch unit, respectively,
Figure 2 shows a variant of the circuit-breaker and disconnect-switch unit.

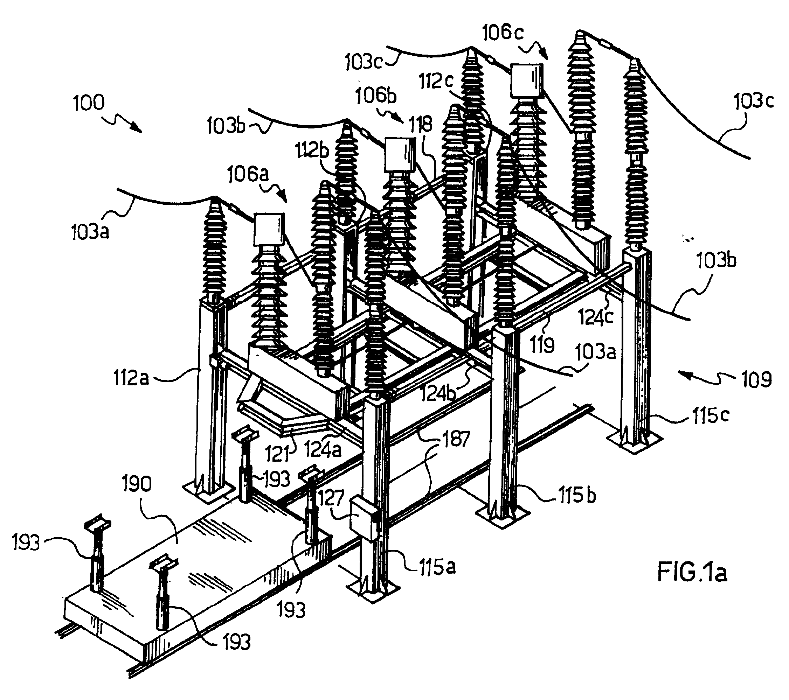

With reference in particular to Figure 1a, this shows a multifunctional circuit-breaker and disconnect-switch structure 100 for a three-phase high-tension line constituted by three aerial conductors indicated 103a, 103b and 103c. A respective circuit-breaker and disconnect-switch unit 106a, 106b and 106c is connected in series with each supply conductor 103a, 103b and 103c.

The circuit-breaker and disconnect-switch structure 100 has a framework 109 formed by three left-hand posts 112a, 112b, 112c and by three right-hand posts 115a, 115b, 115c, each having, at its lower end, a plate for fixing to the ground. The left-hand posts 112a-112c and the right-hand posts 115a-115c are joined together by respective stiffening rails 118 and 119. The framework 109 supports a platform 121 formed by a frame (with various internal reinforcing cross-members) across which three bars 124a, 124b and 124c extend transversely. The free ends of the bars 124a-124c project relative to the frame and are fixed to the corresponding posts 112a-112c and 115a-115c. The circuit-breaker and disconnect-switch units 106a, 106b and 106c are disposed on the bars 124a, 124b and 124, respectively. A general control panel 127 (connected to the platform 121 by means of releasable cables) is fixed in the vicinity of the base of the right-hand post 115a.

Similar remarks apply if the circuit-breaker and disconnect-switch structure is of a different type, if the supply line has a different number of phases (or is even a single-phase line), and if the structure consequently has a different number of circuit-breaker and disconnect-switch units (or even only one), etc.

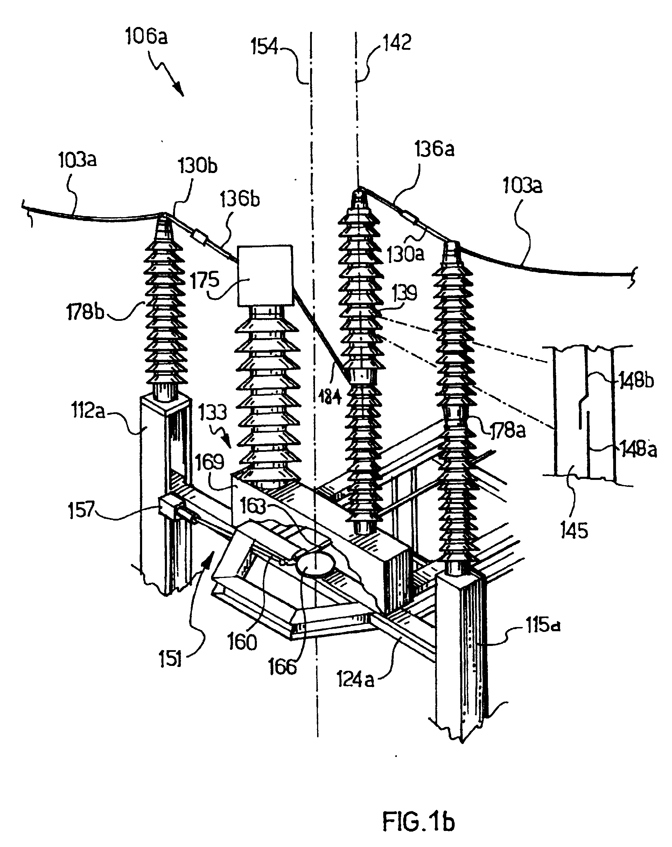

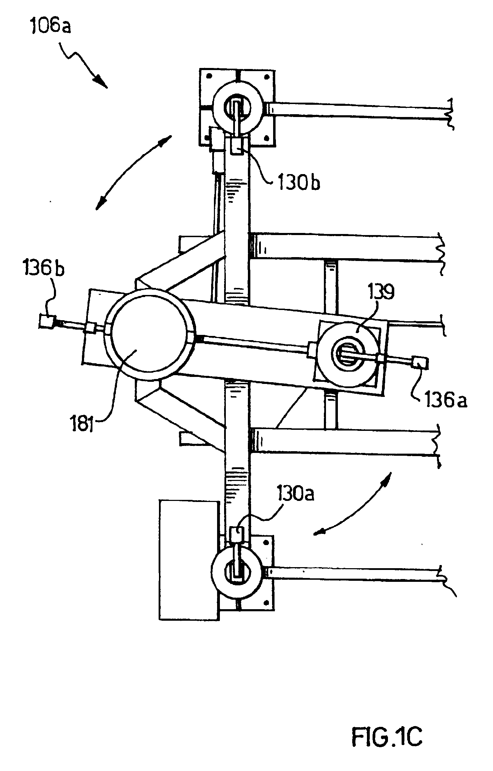

With reference now to Figure 1b, the circuit-breaker and disconnect-switch unit 106a (similar remarks apply to the other circuit-breaker and disconnect-switch units 106b, 106c) has two fixed contacts 130a and 130b connected to the supply line 103a. The circuit-breaker and disconnect-switch unit 106a includes a movable support element 133 (disposed on the bar 124a). As described in detail below, two movable contacts (or pincers) 136a and 136b are provided on the support element 133. When the support element 133 (and hence also the circuit-breaker and disconnect-switch unit 106a) is in a closed position, the movable contacts 136a and 136b are connected electrically to the corresponding fixed contacts 130a and 130b; when the support element 133 is in an open position, the movable contacts 136a and 136b are separated from the corresponding fixed contacts 130a and 130b by a suitable distance to ensure a required level of insulation and to indicate visually to an operator the open or closed position of the circuit-breaker and disconnect-switch unit 106a.

A high-tension circuit-breaker 139 of a gas puffer type or of another equivalent type, (constituted by a single-pole unit of a three-phase circuit-breaker) is also disposed on the support element 133 and is connected electrically between the movable contacts 136a and 136b. The circuit-breaker 139 is disposed along a longitudinal axis 142 and has a circuit-breaking chamber 145 which houses a fixed contact 148a and a movable contact 148b; when the circuit-breaker 139 is opened (separating the movable contact 148b from the fixed contact 148a), the contacts 148a, 148b are struck by a puff of a gas with a high dielectric strength, such as SF₆, which extinguishes an electric arc formed between them.

In the circuit-breaker and disconnect-switch structure according to the present invention, there is an operating mechanism 151 (described in detail below) which can cause the support element 133 to rotate between the closed position and the open position about an axis of rotation 154 substantially parallel to the longitudinal axis 142 of the circuit-breaker 139.

This solution considerably reduces the mechanical stresses on the circuit-breaker and, in particular, on its switching chamber, so that the circuit-breaker and disconnect-switch structure is more reliable; this reduces the likelihood of breakdown and hence the duration of any periods in which the circuit-breaker and disconnect-switch structure is out of use.

Moreover, the structure of the present invention permits quick and easy maintenance of the circuit-breaker since it is not under tension when the circuit-breaker and disconnect-switch unit is in the open position, and can therefore be removed easily. This result is achieved by a particularly simple and compact structure.

The rotation axis 154 preferably coincides with a principal vertical axis (in a condition of use) of the circuit-breaker and disconnect-switch unit 106a. This enables a movement of the support element of the circuit-breaker and disconnect-switch unit to be kept minimal and thus limits the mechanical stresses to which the circuit-breaker and disconnect-switch unit is subject during rotation; the size of the structure is thus further reduced and its reliability is further increased. The solution of the present invention may, however, also be implemented with a non-vertical rotation axis which does not coincide with the axis of the circuit-breaker and disconnect-switch unit, etc.

In the embodiment shown in the drawing, the drive mechanism 151 is constituted by an actuator motor 157 disposed in the vicinity of the left-hand free end of the bar 124a; the motor 157 has a shaft 160 (parallel to the bar 124a) which is coupled by means of bevel gears, to a worm screw 163 (perpendicular to the bar 124a) which drives the support elements of all of the circuit-breaker and disconnect-switch units of the structure. In particular, the support element 133 has a gear 166 meshed with the worm screw 163; the gear 166 rotates the support element 133 alternatively clockwise or anticlockwise through an angle slightly smaller than 90°.

The support element 133 is constituted by a base formed by a hydraulic control box 169 of the circuit breaker 139. The circuit-breaker 139 and a current transformer (amperometric transducer or AT) 175 are mounted on the control box 169; the circuit breaker 139 and the current transformer 175 are disposed in the vicinity of respective opposite longitudinal ends of the control box 169 and also perform the function of insulating columns for the movable contacts 136a and 136b, respectively. An insulating column 178a (having a height equal to that of the circuit breaker 139) and an insulating column 178b (having a height equal to that of the current transformer 175) extend upwards from the upper ends of the posts 115a and 112a, respectively. The fixed contacts 130a and 130b are disposed on the upper free ends of respective insulating columns 178a and 178b. A conductor 184 connects the current transformer 175 to the circuit-breaker 139.

The current transformer 175 is disposed on the support element 133 and is connected in series with the circuit breaker 139 between the movable contacts 136a and 136b. When the circuit-breaker and disconnect-switch unit 106a is in the open position, the current transformer 175 (as the circuit breaker 139) is not therefore under tension; this enables maintenance operations also to be performed easily on this component.

Similar remarks apply if the circuit-breaker and disconnect-switch unit has a different structure, if a different drive mechanism is used (which may even rotate the support element through a different angle), if another equivalent measuring device is provided, etc; the solution of the present invention may, however, also be implemented with the current transformer connected in series with the circuit-breaker and disconnect-switch unit, or even without any current transformer.

In order to explain the operation of the above-described structure, an initial condition in which the circuit-breaker and disconnect-switch unit 106a is in the closed position with the circuit-breaker 139 also closed so as to establish a flow of current in the supply line 103a is considered. If an overload condition (for example, a short circuit) arises, or if a maintenance operation is required, the movable contact 148b is separated from the fixed contact 148a in order to open the circuit-breaker 139 extremely quickly and to interrupt a current flow in the supply line 103a. The control box 169 (and hence also the circuit-breaker 139 and the current transformer 175 fixed thereto, on which the respective movable contacts 136a and 136b are disposed) is then rotated clockwise through about 90° about the axis 154 (more slowly) in order to bring the circuit-breaker and disconnect-switch unit 106a to the open position, as shown in Figure 1c.

With further reference to Figure 1a, once all of the circuit-breaker and disconnect-switch units 106a-106c are in the open position, they are preferably removed from their operative positions (which are raised from a ground level) and extracted from the framework 109. In particular, the posts 112a-112c, 115a-115c have C-shaped cross-sections and act as guides for the free ends of the corresponding bars 124a-124c. A track 187 (composed of two parallel rails) is fixed to the ground beneath the platform 121 with each rail parallel to a main side edge thereof. The track 187 extends from a rear end of the framework 109 and projects from the framework at the front for a distance approximately equal to the length of the platform 121. A lift truck 190 which runs on the track 187 is constituted by a base from each corner of which a hydraulic jack 193 extends upwards, terminating in a plate for coupling with the frame of the platform 121. The jacks 193 are controlled by a single oleodynamic system (not shown in the drawing) to ensure perfect synchronism of movement.

Once the circuit-breaker and disconnect-switch units 106a-106c are in the open position, the truck 190 is moved under the platform 121 and the jacks 193 are raised until they engage the frame of the platform 121. The free ends of the bars 124a-124c are released from the corresponding posts 112a-112c, 115a-115c (remaining supported by the jacks 193). The jacks 193 are lowered, moving the platform 121 (with the circuit-breaker and disconnect-switch units 106a-106c) to a lowered position at ground level. The ends of the bars 124a-124c are released from the corresponding posts 112a-112c, 115a-115c and the connection cables of the control panel 127 are disconnected from the platform 121. The truck 190 is then moved out of the framework 109. The same operations are performed in reverse order to return the platform 121 (with the circuit-breaker and disconnect-switch units 106a-106c) to the operative position and to establish a flow of current in the supply lines 103a-103c.

This characteristic is particularly advantageous since it greatly facilitates access to the circuit-breakers and to the current transformers for maintenance operations. Similar remarks apply if a different support structure is provided for the circuit-breaker and disconnect-switch units, if other guide means are used to move the circuit-breaker and disconnect-switch units between the raised position and the lowered position, or if equivalent means are provided for extracting the circuit-breaker and disconnect-switch units; the solution of the present invention may, however, also be implemented with the capability solely to lower the circuit-breaker and disconnect-switch units to ground level but not to extract them from the framework, with the circuit-breaker and disconnect-switch units fixed in the raised position, etc.

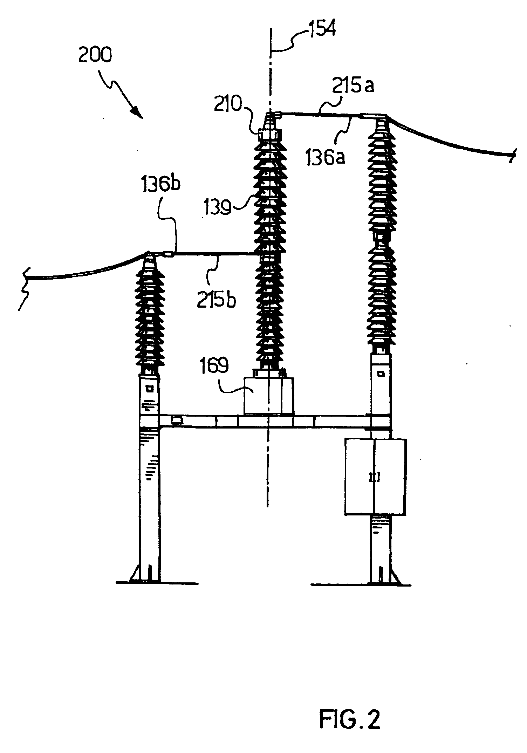

As shown in Figure 2 (elements corresponding to those shown in Figure 1b are identified by the same reference numerals) an alternative embodiment provides for a circuit-breaker and disconnect-switch unit 200 in which the circuit breaker 139 extends upwards from the centre of the control box 169; an optical current transformer 210 is included in the circuit-breaker 139 (disposed on top of an insulating tube thereof). A rotatable arm 215a (connected electrically to the current transformer 210) extends horizontally from an upper end of the insulating tube of the circuit breaker 139 and terminates in the movable contact 136a; a further rotatable arm 215b (connected electrically to the circuit breaker 139) extends horizontally from an intermediate point of the insulating tube of the circuit breaker 139 and terminates in the movable contact 136b.

The operation of the circuit-breaker and disconnect-switch unit 200 is similar to that of the unit described above. In this case, the rotation axis 154 coincides with the longitudinal axis of the circuit breaker 139 and also extends through the current transformer 210. This offers the advantage of further reducing the mechanical stresses on the circuit breaker and on the current transformer.

Naturally, in order to satisfy contingent and specific requirements, an expert in the art may apply to the above-described circuit-breaker and disconnect-switch structure many modifications and variations all of which, however, are included in the scope of protection of the invention, as defined by the following claims.

## Claims

1. A circuit-breaker and disconnect-switch structure (100) for a high-tension supply line (103a-103c) comprising at least one circuit-breaker and disconnect-switch unit (106a-106c) having a support element (133) for a first movable contact (136a) and a second movable contact (136b), and for a circuit breaker (139) disposed along a longitudinal axis (142) and connected between the first and second movable contacts (136a, 136b), the support element (133) being movable between a closed position and an open position in which the first and second movable contacts (136a, 136b) are connected to the supply line (103a) and are separated from the supply line (103a), respectively,
characterized in that
the at least one circuit-breaker and disconnect-switch unit (106a) includes drive means (151) for moving the support element (133) between the closed position and the open position by rotating about an axis (154) substantially parallel to the longitudinal axis (142) of the circuit breaker (139).

2. A circit-breaker and disconnect-switch structure (100) according to Claim 1, in which the at least one circuit-breaker and disconnect-switch unit (106a) has a principal axis which is arranged vertically in a condition of use, the rotation axis (154) coinciding with the principal axis.

3. A circuit-breaker and disconnect-switch structure (100) according to Claim 1 or Claim 2, in which the at least one circuit-breaker and disconnect-switch unit (106a) further comprises a measurement device (175) disposed on the support element (133) and connected in series with the circuit breaker (139) between the first (136a) and the second (136b) movable contact.

4. A circuit-breaker and disconnect-switch structure (100) according to Claim 3, in which the measurement device is a current transformer (175).

5. A circuit-breaker and disconnect-switch structure (100) according to Claim 3 or Claim 4, in which the support element (133) includes a base (169) disposed transverse the rotation axis (154), and in which the circuit breaker (139) and the measurement device (175) are disposed in the vicinity of respective opposite longitudinal ends of the base (169), the first (136a) and second (136b) movable contact being disposed on the circuit breaker (139) and on the measurement device (175), respectively.

6. A circuit-breaker and disconnect-switch structure (100) according to Claim 3 or Claim 4, in which the circuit breaker (139) and the measurement device (210) are aligned with one another along the rotation axis (154), the first (136a) and second (136b) movable contact being disposed, respectively, on a first rotatable arm (215a) and on a second rotatable arm (215b) which extend perpendicular to the circuit breaker (139).

7. A circuit-breaker and disconnect-switch structure (100) according to any one of Claims 1 to 6, further comprising support means (109) for keeping the at least one circuit-breaker and disconnect-switch unit (106a-106c) in an operative position raised from a ground level, the support means (109) comprising means (112a-112c, 115a-115c, 121) for guiding the at least one circuit-breaker and disconnect-switch unit (106a, 106c) between the raised position and a lowered position at ground level.

8. A circuit-breaker and disconnect-switch structure (100) according to Claim 7, further comprising means (187, 190, 193) for removing the at least one circuit-breaker and disconnect-switch unit (106a-106c) from the support structure (109) when the at least one circuit-breaker and disconnect-switch unit (106a-106c) is in the lowered position.

9. A circuit-breaker and disconnect-switch structure (100) according to Claim 8, in which the support means (109) include a plurality of posts (112a-112c, 115a-115c) and a platform (121) which is slidable in the posts (112a-112c, 115a-115c) and on which the at least one circuit-breaker and disconnect-switch unit (106a-106c) is supported, the removal means (187, 190, 193) comprising lifting means (190, 193) for moving the platform (121) between the raised position and the lowered position and means (187) for moving the lifting means (190, 193) horizontally when the platform (121) is in the lowered position.

10. A method of interrupting and disconnecting a high-tension supply line (103a-103c) comprising the steps of:
providing a circuit-breaker and disconnect-switch structure (100) comprising at least one circuit-breaker and disconnect-switch unit (106a-106c) having a support element (133) for a first movable contact (136a) and a second movable contact (136b), and for a circuit breaker (139) disposed along a longitudinal axis (142) and connected between the first and second movable contacts (136a, 136b),
opening the circuit breaker (139),
moving the support element (133) from a closed position in which the first and second movable contacts (136a, 136b) are connected to the supply line (103a) to an open position in which the first and second movable contacts (136a, 136b) are separated from the supply line (103a),
characterized by the step of:
moving the support element (133) from the closed position to the open position by rotating about an axis (154) substantially parallel to the longitudinal axis (142) of the circuit-breaker (139).
